(19) Europäisches Patentamt
European Patent Office
Office européen des brevets

(11) **EP 2 345 020 B1**

(12) **EUROPÄISCHE PATENTSCHRIFT**

(45) Veröffentlichungstag und Bekanntmachung des Hinweises auf die Patenterteilung:
**24.02.2016 Patentblatt 2016/08**

(21) Anmeldenummer: **09783452.7**

(22) Anmeldetag: **28.09.2009**

(51) Int Cl.:
*G08G 1/08* (2006.01)        *G06N 3/12* (2006.01)
*G08G 1/081* (2006.01)

(86) Internationale Anmeldenummer:
**PCT/EP2009/062485**

(87) Internationale Veröffentlichungsnummer:
**WO 2010/040649 (15.04.2010 Gazette 2010/15)**

(54) **VERKEHRSADAPTIVE NETZSTEUERUNG UND VERFAHREN ZUR OPTIMIERUNG DER STEUERUNGSPARAMETER**

TRAFFIC-ADAPTIVE NETWORK CONTROL AND METHOD FOR OPTIMIZING THE CONTROL PARAMETERS

SYSTÈME DE COMMANDE DE RÉSEAU POUVANT S'ADAPTER À LA CIRCULATION, ET PROCÉDÉ POUR OPTIMISER LES PARAMÈTRES DE COMMANDE ASSOCIÉS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **08.10.2008   DE 102008050822**

(43) Veröffentlichungstag der Anmeldung:
**20.07.2011   Patentblatt 2011/29**

(73) Patentinhaber: **PTV Planung Transport Verkehr AG**
**76131 Karlsruhe (DE)**

(72) Erfinder:
• **KEMPER, Carsten**
**81379 München (DE)**

• **BRAUN, Robert**
**80802 München (DE)**
• **MAIER, Peter**
**83620 Westenham (DE)**
• **WEICHENMEIER, Florian**
**80333 München (DE)**

(74) Vertreter: **von Hirschhausen, Helge Grosse - Schumacher - Knauer - von Hirschhausen Patent- und Rechtsanwälte Nymphenburger Straße 14 80335 München (DE)**

(56) Entgegenhaltungen:
**DE-A1- 19 841 457     JP-A- 8 171 694**
**JP-A- 2003 331 386**

**Beschreibung**

Die Erfindung betrifft eine Verkehrssteuerung mit Online-Optimierung der Steuerungsparameter von Signalplänen von Lichtsignalanlagen, ein Verfahren zu deren Durchführung sowie ein Computerprogramm-Produkt.

Es ist z. B. aus der DE 10 2005 041 067 A1 bekannt, die Lichtsignalanlage an einer Kreuzung von zwei Straßen autonom ablaufen zu lassen, indem jeweils die Verkehrsströme auf der sich kreuzenden Straßen erfasst werden und die Steuerung der Lichtsignalanlage der Kreuzung entsprechend momentaner und langfristiger Beobachtung erfolgt, um den Verkehrsfluss zu optimieren. Es kann somit auch mit einer gewissen Wahrscheinlichkeit eine so genannte grüne Welle erreicht werden. Die Verbindung zu anderen Lichtsignalanlagen eines innerstädtischen Straßennetzes, womit in höherem Maße ein optimierter Verkehrsfluss einhergehen könnte, erfolgt jedoch nicht.

In der DE 10 2005 035 213 A1 wird die Kommunikation zwischen benachbarten Verkehrssteuerungsanlagen beschrieben. Hierbei wird jedoch keine Erweiterbarkeit auf ein gesamtes Straßennetz einer Großstadt beschrieben. Ferner ist es erforderlich, dass die Fahrzeuge selbst auch noch mit Kommunikationsgeräten ausgerüstet sind.

Es hat auch nicht an Versuchen gefehlt, die Lichtsignalanlagen eines gesamten Straßennetzes einer Großstadt über einen Verkehrsrechner zu beeinflussen (vgl. z. B. DE 10 2005 044 888 B4). Bei einem größeren Straßennetz ist es jedoch bis jetzt erst gelungen, den Verkehrszustand als Schätz-Ergebnis auszuweisen. Für die einzelnen Lichtsignalsteuerungen wurde zum Teil ein autonomer Betrieb vorgesehen.

Aus der DE 198 41 457 A1 ist ein Verfahren zur Ermittlung eines verkehrsabhängigen Signalprogrammes für Signalgruppen von Signalanlagen bekannt. Das Signalprogramm wird unter Berücksichtigung von aktuellen, durch Verkehrsdetektoren ermittelten Daten, an den aktuellen Verkehrsablauf angepasst.

Es ist im Fachgebiet auch bekannt, dass verkehrsabhängige Lichtsignalsteuerungen in Ballungsgebieten seit geraumer Zeit im Einsatz sind. Ihre Wirkungen wurden bereits in verschiedenen Untersuchungen analysiert und mit denen von Festzeitsteuerungen verglichen. Die Ergebnisse zeigen, dass durch die Verkehrsabhängigkeit der Verkehrsfluss in Städten verbessert wird, insbesondere bei geringer bis mittlerer Auslastung der Knotenpunkte und bei wechselnder Verkehrsnachfrage. Weiterhin wurde herausgefunden, dass gewöhnliche, verkehrsabhängige Steuerungsverfahren bei hohen Auslastungen zu Festzeitsteuerungen auflaufen und dadurch keinen Vorteil mehr gegenüber der kostengünstig zu realisierenden Festzeitsteuerung bieten.

Aus diesem Grund wurden in der Vergangenheit verschiedene modellbasierte Steuerungsverfahren entwickelt, die in der Lage sind, mit der begrenzten Information der Datenerfassung die Verkehrssituation nahezu richtig zu prognostizieren und die Wirkungen auf den Verkehrsfluss in Abhängigkeit der Lichtsignalsteuerung zu berechnen.

Die Aufgabe der Erfindung besteht darin, eine Verkehrsteuerung mit einem Verkehrsrechner bereitzustellen, bei der Signalpläne von Steuerungen aller Lichtsignalanlagen eines Verkehrsnetzes aktualisiert werden können, um einen optimalen Verkehrsfluss innerhalb des Verkehrsnetzes zu erreichen. Des Weiteren ist es Aufgabe der Erfindung ein Verfahren zum Betrieb der erfindungsgemäßen Verkehrssteuerung sowie ein Computerprogrammprodukt anzugeben.

Die Aufgabe wird bei einer Verkehrssteuerung nach Anspruch 1 gelöst.

Ferner wird die Aufgabe bei einem Verfahren zum Betrieb der Verkehrssteuerung nach Anspruch 5 gelöst.

Das Computerprogrammprodukt nach Anspruch 10 berücksichtigt, das dieses direkt in einen Speicherbereich, mindestens einen Unterbereich des Verkehrsrechners oder eines separaten Rechners, ladbar ist, mit Programmcode-Mitteln, die dazu bestimmt sind, einzelne oder alle Schritte des vorstehen beschriebenen Verfahrens auszuführen, wenn das Computerprogrammprodukt auf dem entsprechenden Rechner der Verkehrssteuerung ausgeführt wird.

Mit der Erfindung ist es möglich, einen eindeutig verbesserten Verkehrsfluss in einem städtischen Verkehrsnetz zu erreichen. Die Stauungen im Verkehrsnetz sind beachtlich geringer, womit ein geringerer Kraftstoffverbrauch der Fahrzeuge der Verkehrteilnehmer einhergeht und weniger schädliche Abgase die Umwelt belasten. Mit der Erfindung wird es ferner möglich, in einem Optimierungszeitintervall von fünf bis zehn Minuten die Signalpläne aller Lichtsignalanlagen des Verkehrsnetzes auszugeben.

Zweckmäßige und weiterhin vorteilhafte Weiterbildungen der Verkehrsteuerung und des Verfahrens zum Betrieb der Verkehrssteuerung sind in den abhängigen Ansprüchen angegeben.

Für die Verkehrssteuerung ist ferner vorgesehen, dass der Verkehrsrechner einen Bereich mit Unterbereichen aufweist, der die Evolutionären Algorithmen (ev. Alg.) bzw. genetischen Algorithmen (gen. Alg.), ein Abbruchkriterium (Abbruch) und bei relativer Kodierung den Reparaturmechanismus oder die sequentielle Kodierung verkörpert sowie dass der Bereich durch einen separaten Rechner gebildet werden kann, der in Datenaustausch mit dem Rechner steht.

Zur Weiterbildung des Verfahrens gehört insbesondere, dass Individuen aus der neuen Population in Signalpläne dekodiert werden, die dem weiteren Schleifendurchlauf unterliegen, wobei in Abhängigkeit von der Rechenleistung des Rechners eine erhebliche Anzahl von Individuen, die Signalpläne repräsentieren, erzeugt werden. Gute Ergebnisse wurden beispielsweise mit 100 Individuen erreicht.

Bei dem Reparaturmechanismus bei relativer Kodierung sind T-Zeiten für jedes Chromosom definiert, und es wird jede T-Zeit überprüft, ob sie sich innerhalb des Intervalls $[T_{iB}^{min}; T_{iB}^{max}]$ befindet und falls dies nicht der Fall ist, wird der gesamte Signalplan mit Hilfe des lokalen Versatzes 0 so verschoben, so dass die ungültige T-Zeit der nächsten Grenze des Intervalls $[T_{iB}^{min}; T_{iB}^{max}]$ entspricht, wobei anschließend alle T-Zeiten erneut überprüft werden müssen.

Ferner ist hervorzuheben, dass bei der sequentiellen Kodierung T-Zeiten $T_i$ sequentiell berechnet werden, wobei die *erste* T-Zeit $T_1$, die dem lokalen Versatz entspricht, sich dabei direkt aus dem Gen $\theta_1$ berechnet:

$$T_1 = \left(\tau_1^{min} + \theta_1 \cdot \left(\tau_1^{max} - \tau_1^{min}\right)\right)$$

und ferner für alle Zeiten $T_i$ vorgesehen ist, dass sie sich jeweils im Intervall

$$T_i \in \left[\max\left(T_i^{min}, T_{i-1} + Z_{i-1}\right), \min\left(T_i^{max}, T_{i|i+1}^{max}, T_{i|i+2}^{max}, \ldots, T_{i|n}^{max}, T_1 + t_U - \sum_{l=i}^{n} Z_l\right)\right]$$

befinden und analog wie $T_1$ über das zugehörige Gen $\theta_1$ berechnet werden.

Die Erfindung wird nachfolgend im Einzelnen und anhand von Ausführungsbeispielen weiter erläutert. Es zeigen:

Fig. 1:   eine vernetzte Steuerung von Lichtsignalanlagen in Prinzipdarstellung,

Fig. 2.   ein Blockschaltbild mit Lichtsignalanlagen, Detektoren und Verkehrsrechner,

Fig. 3:   ein Funktionsdiagramm zur Optimierung von Signalplänen mit Hilfe von Evolutionären Algorithmen,

Fig. 4:   ein Phasendiagramm mit T-Zeitgrenzen für die lokale verkehrsabhängige Steuerung,

Fig. 5:   ein Phasendiagramm für die relative Kodierung von Umlaufzeit und Freigabezeiten, und

Fig. 6:   ein Phasendiagramm mit Darstellung der Einschränkung der Intervallgrenzen für T, im Zusammenhang mit einer erfindungsgemäßen sequentiellen Kodierung.

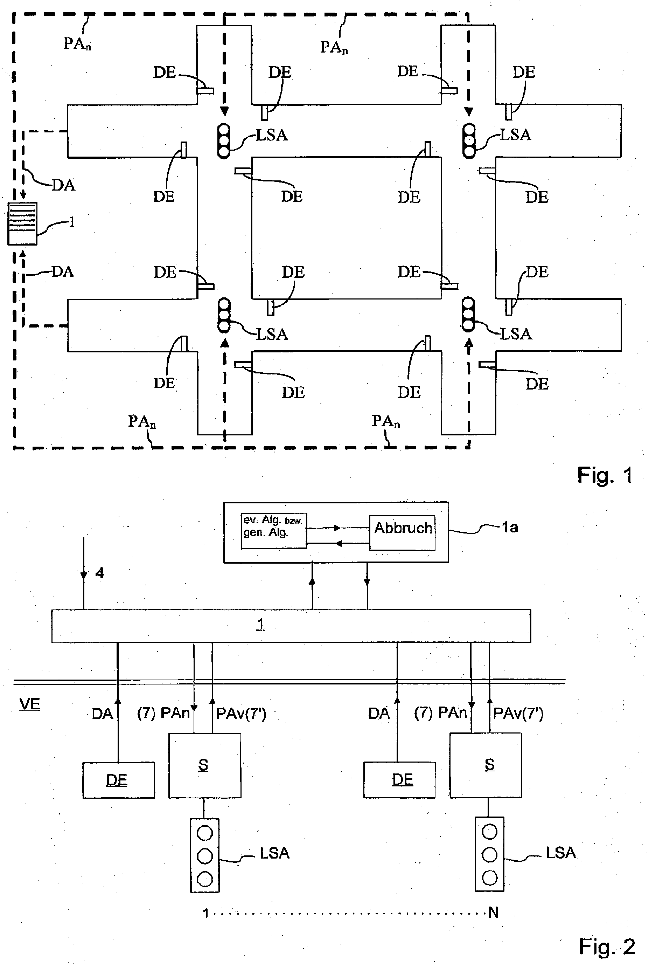

Die Fig. 1 zeigt eine vernetzte Steuerung bzw. Verkehrssteuerung von Lichtsignalanlagen LSA in einer Prinzipdarstellung mit vier Kreuzungen eines insgesamten Straßennetzes, z. B. von einer Großstadt mit N Lichtsignalanlagen, entsprechend N Kreuzungen (n Knoten), deren Verkehrsfluss günstig zu beeinflussen ist. Verkehrsdaten DA werden dazu aus den Detektoren DE gewonnen und zentral von einem Verkehrsrechner 1 ausgewertet. Anschließend wird die erwartete netzweite Verkehrslage berechnet. Als Ergebnis werden die optimierten neuen Lichtsignalpläne bzw. Steuerungsparameter $PA_n$, die der Verkehrsrechner aus den zuvor vorliegenden Steuerungsparameters $PA_v$ gewinnt an die einzelnen Lichtsignalanlagen LSA im Netz gesendet und so die aktuelle Verkehrssituation beeinflusst. Soweit in Fig. 1 der bidirektionale Datenfluss bezüglich der Steuerungsparameter DA nicht differenziert erkennbar ist, so geht dies eindeutig aus Fig. 2 hervor, die die Anbindung des Verkehrsrechners 1 an die einzelnen Steuerungen S von Lichtsignalanlagen eines Verkehrs- bzw. Straßennetzes, zugeordnet dem Verkehrsgeschehen VE bzw. der realen Welt, zeigt. Die Steuerungen S sind in der Lage, den der einzelnen Lichtsignalanlage LSA vom Verkehrsrechner 1 zugewiesenen, optimierten Signalplan, wozu nachstehend noch weitere Erläuterungen folgen, aufgrund der übertragenen neu aktualisierten Parameter $PA_n$ umzusetzen, so dass die Lichtsignalanlage danach betrieben werden kann. Es ist eine Beeinflussung aller Lichtsignalanlagen N aller N Kreuzungen des Verkehrsnetzes vorgesehen. Im Übrigen wird noch ergänzt, dass der Verkehrsrechner 1 einen Bereich 1a aufweist, der die eigentliche Erfindung verkörpert, nämlich Unterbereiche des Bereichs 1a, die geeignete Speicherinhalte aufweisen, um die - auch nachfolgend beschriebenen - evolutionären/genetischen Algorithmen "ev. Alg./gen.Alg." als auch die Abbruchkriterien "Abbruch"-, im Besonderen bei der relativen Kodierung mittels eines Reparaturmechanismus oder alternativ unmittelbar gebildet durch geeignete Anwendung einer sequentiellen Kodierung, aufnehmen zu können. Es ist auch möglich, dass der Bereich 1a des Verkehrsrechners 1 durch einen separaten Rechner gebildet wird, der dann unmittelbar und direkt die beanspruchte Erfindung verkörpert. Ebenso wird die Erfindung durch ein Computerprogrammprodukt verkörpert, das direkt in einen Speicherbereich 1a, mindestens Unterbereich von 1a des Verkehrsrechners 1 oder eines separaten Rechners, ladbar ist, mit Programmcode-Mitteln, die dazu bestimmt sind, einzelne oder alle Schritte des vorstehend beschriebenen Verfahrens auszuführen, wenn das Computerprogrammprodukt auf dem entsprechenden Rechner der Verkehrssteuerung ausgeführt wird.

Zum Verständnis der Erfindung wird erläutert, dass modellbasierten Steuerungsverfahren, realisiert mit einem herkömmlichen Verkehrsrechner, äußerlich wie obig dargestelltem Verkehrsrechner 1 entsprechend, zum Teil auf die vorhandenen Lichtsignalsteuerungsverfahren (Festzeit- oder verkehrsabhängige Steuerungslogik, zugeordnet zu einer individuellen Steuerung einer Lichtsignalanlage) aufsetzen und die Parameter, der bei der Planung der Steuerung entstandenen Signalpläne mit Hilfe mehr oder weniger komplexer mathematischer Verfahren optimieren, ohne dass von einer konsequenten Online-Steuerung gesprochen werden könnte.

Die Kodierung der Steuerungsparameter für die individuellen Steuerungen der Lichtsignalanlagen des Verkehrsnetzes soll nun erläutert werden. Dazu wird wie folgt ausgeführt. Ein Signalplan lässt sich über folgende Steuerungsparameter beschreiben:

- Umlaufzeit
- Versatzzeit
- Phasenfolge
- Phasendauern (bzw. Startzeitpunkte der Phasenübergänge)

Ein Signalplan läuft innerhalb der Umlaufzeit einmal komplett ab. Die Versatzzeit beschreibt den zeitlichen Versatz des Referenzpunkts des lokalen Signalplans zur globalen (netzweit gültigen) Zeitskala. Die Phasenfolge gibt an, welche Phasen in welcher Reihenfolge geschaltet werden. Die Phasendauern bzw. die Startzeitpunkte der Phasenübergänge geben die Dauer einer Phase an.

Die netzweite Optimierung dieser Parameter für alle Lichtsignalanlagen stellt ein komplexes Problem mit einer sehr hohen Anzahl von Freiheitsgraden dar. Das Optimierungsproblem gehört zur Klasse der NP-vollständigen Probleme und ist analytisch nicht zu lösen, da keine geschlossene mathematische Formulierung möglich ist.

Es ist bekannt, bei in der Online-Optimierung von Steuerungsparametern, die bestimmend sind für die Signalpläne, insbesondere für die Steuerung von Lichtsignalanlagen, die Verwendung von mathematisch exakten Verfahren wie Analytische Optimierungsverfahren und Optimierungsverfahren mit endlichem Rechenprozess sowie mathematischer Näherungsverfahren, wie der Hill-Climbing Algorithmus und das Gradientenverfahren heranzuziehen. Für die Offline-Optimierung werden seit einiger Zeit heuristische Verfahren angewendet, um die Steuerungsparameter zu optimieren. Zu den heute bekannten und verwendeten heuristischen Verfahren zählen z.B.

- Complex-Methode
- Simulierte Abkühlung
- Ameisenkolonieoptimierung
- Partikelschwarmoptimierung
- Evolutionäre Algorithmen
- Memetische Algorithmen

Der bei der Erfindung gewählte, letztlich erfolgreich ausgestaltete, Ansatz zählt zu den Evolutionären Algorithmen. Evolutionäre Algorithmen werden immer häufiger dort eingesetzt, wo große Lösungsräume effizient nach einem Optimum durchsucht werden müssen. Nachteil dieser Verfahren ist jedoch der enorm hohe Rechenzeitaufwand, weshalb diese Verfahren bislang ausschließlich offline, zumeist in der Planung von Lichtsignalanlagen eingesetzt werden.

Im Vorfeld der Erfindung wurde herausgefunden, dass die Kodierung der Steuerungsparameter von entscheidender Bedeutung für die Qualität und Funktionsfähigkeit der Optimierung ist. Unter Kodierung ist bei einem evolutionären Algorithmus die Übersetzung der (in diesem Fall) Signalpläne (Phänotyp) in ein für den evolutionären Algorithmus verarbeitbares Individuum (Genotyp) zu verstehen. Die Rückübersetzung eines Individuums in die Signalpläne wird folglich als Dekodierung bezeichnet. Das Individuum besteht aus einzelnen Genen, die die Steuerungsparameter repräsentieren.

Die Gene werden nicht wie üblich binär, sondern reell kodiert. Reell kodierte Gene haben den Vorteil, dass sie direkt als numerischer Wert interpretiert werden können und außerdem über die höchste Zahl an Freiheitsgraden bezüglich Rekombination und Mutation verfügen. Durch die reelle Kodierung, also durch die Nutzung reeller Zahlen (Fließkommazahlen) können die verwendeten Algorithmen schneller stabile Lösungen erreichen.

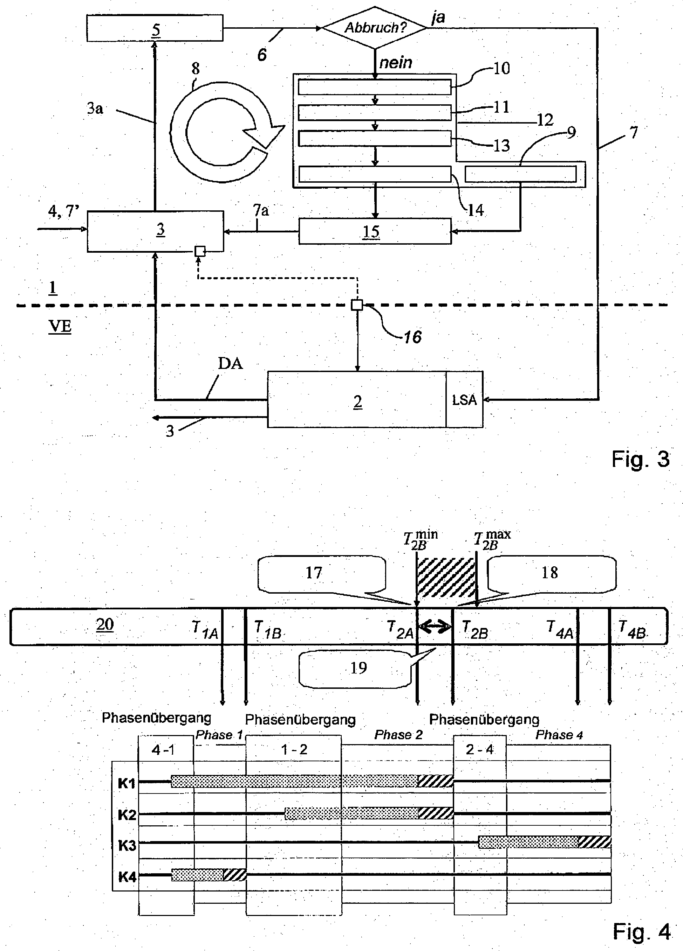

Bevor die Optimierung beginnt, wird der aktuelle Signalplan bewertet. Dazu wird (vgl. Fig. 3) der Verkehrsfluss 2 über die Detektoren DA gemessen und an das Verkehrsmodell 3, also einem mathematischen Modell zur Abbildung von Verkehrsströmen im Rechner 1, übergeben. Über die Netzversorgung 4 bzw. über das Verkehrsnetz stehen dem Verkehrsmodell 3 die aktuellen Signalpläne 7' aller zu optimierenden Lichtsignalanlagen zur Verfügung, wodurch die Wirkung der Signalpläne auf den Verkehrsfluss 2 bestimmt wird. Bewertet wird der Verkehrsfluss 2 durch eine mathematische Beschreibung des Ziels, der Zielfunktion 5. Ziel der Optimierung kann z.B. sein, die Wartezeiten, die Zahl der Halte, die Rückstaulängen und/oder den Kraftstoffverbrauch im gesamten Verkehrsnetz zu minimieren. Das Ergebnis der Bewertung ist ein skalarer Wert im Folgenden mit Fitness 6 bezeichnet. Diese erstmalige Bewertung der Signalpläne 7a wird als Referenz für die im Folgenden ablaufende Optimierung verwendet, d.h. durch die Optimierung wird versucht, gemäß der Zielfunktion, z.B. die Wartezeiten, die Zahl der Halte, die Rückstaulängen und/oder den Kraftstoffverbrauch im gesamten Verkehrsnetz zu minimieren und dadurch im Vergleich zum Referenzwert einen geringeren skalaren Wert zu erreichen.

Zum weiteren Verständnis ist wieder die schon erwähnte Fig. 3 heranzuziehen, die ein Funktionsdiagramm zur Optimierung der Signalpläne mit Hilfe von evolutionären Algorithmen zeigt.

Zu Beginn der Optimierung 8 wird eine Anfangspopulation 9 erzeugt, also eine bestimmte Anzahl von Individuen, die jeweils die Signalpläne aller Lichtsignalanlagen in kodierter Form repräsentieren. Diese Individuen der Anfangspopulation 9 werden entweder zufällig generiert oder aus einer Datei/Datenbank gelesen, sofern bereits gute Individuen, die gute Signalpläne repräsentieren, bekannt sind. Die Individuen werden in Signalpläne 7a dekodiert und mit Hilfe des Verkehrsmodells 3 hinsichtlich der Zielfunktion 5 bewertet. Die Fitnesswerte 6 der Signalpläne werden ihren entsprechenden Repräsentanten (kodierte Individuen) in der Population zugeordnet. Mit Hilfe der Fitness 6 findet dann eine Auswahl von Eltern statt, die so genannte Selektion 10. Durch die Rekombination 11 der ausgesuchten Eltern werden Nachkommen, also neue Individuen (Individuum 11) erzeugt. Die Gene dieser Nachkommen werden nun zufällig mit einer bestimmten Wahrscheinlichkeit mutiert (vgl. Mutation 13). Zusammen mit dem oder den besten Individuen der Elterngeneration wird so eine neue Population 14 gebildet, deren Individuen wiederum in Signalpläne 7a mit der Dekodierung 15 dekodiert und mit Hilfe des Verkehrsmodells 3 bewertet werden. Diese Optimierung 8 der Signalpläne läuft solange ab, bis ein gesetztes Abbruchkriterium (Abbruch) erfüllt ist. Abbruchkriterien sind z.B. maximale Anzahl Generationen, keine Veränderung der Fitness über n Generationen, erreichter Fitnesswert oder die Zeitdauer der Optimierung. Ist dieses erfüllt, so werden die dekodierten Signalpläne 7 an die Lichtsignalanlagen LSA geschickt. Es wurde auch erkannt und wird berücksichtigt, dass zwischen Verkehrsfluss 2 und dem Verkehrsmodell 3 eine Wechselbeziehung "wechselnde Nachfrage / Umwelteinflüsse" besteht, die mit 16 bezeichnet ist. Dies bedeutet, dass das Verkehrsmodell 3 auf externe Einflüsse reagiert.

Die konsequente Nutzung evolutionärer/genetischer Algorithmen in der Online-Optimierung der Lichtsignalsteuerung ist wesentlicher Bestandteil vorliegender Erfindung. Die einzuhaltenden Randbedingungen bei der Optimierung der Steuerungsparameter stellen die größte Schwierigkeit bei der Kodierung und Dekodierung dar. Dabei wird unterschieden zwischen harten Randbedingungen, also denen die zwingend erfüllt sein müssen, und weichen Randbedingungen, also deren Erfüllung wünschwert ist. Lösungen, die eine harte Randbedingung nicht einhalten, werden als ungültig bezeichnet.

Unter zwingenden Randbedingungen sind bei der Signalplanoptimierung die Zwischenzeiten und Mindestfreigabedauern zu verstehen. Diese zeitlichen Anteile des Signalplans stehen somit nicht für die Optimierung zur Verfügung. Ferner müssen zusätzlich die bereits vorhandenen lokalen (d.h. an einem einzelnen Knotenpunkt) verkehrsabhängigen Steuerungen und ÖPNV-Priorisierungen, d.h. Priorisierungen des öffentlichen Nahverkehrs, berücksichtigt werden. Es wurden zurückliegend bei einer messwertbasierten Zeitlückensteuerung schon Versuche unternommen, für den Abbruch einer Phase einen Rahmen vorgegeben, innerhalb dessen der Abbruch erfolgen kann. Der Abbruch einer Phase ist gleichbedeutend mit dem Start eines Phasenübergangs, vgl. Fig. 4, die ein Phasendiagramm mit T-Zeitwertgrenzen für die lokale, verkehrsabhängige Steuerung, mit beispielsweise Kreuzungen K1 bis K4 zeigt. Diese Fig. 4 dient auch zum Verständnis folgender, weiterer Ausführungen. Es soll hier auch eingeschoben werden, dass die Darstellung von Phasendiagrammen Richtlinien des Fachgebietes unterliegt, z. B. Richtlinien für Lichtsignalanlagen, FGSV- Verlag Köln, Berichtigter Nachdruck 1998 und Teilfortschreibung 2003. In der Darstellung in der Fig. 4 ist vorgesehenen, dass die durchgezogene Linie einer roten Linie, dass der gepunktete Bereich einer grünen Fläche und der schraffierte Bereich einer roten Schraffur auf grünem Hintergrund entsprechen soll. Zum Wesen der Erfindung gehört, dass die Optimierungsaufgabe darin besteht, die spätesten Starts der Phasenübergänge $T_{iB}$ für alle LSA im betrachteten Netz so zu bestimmen, dass der Zielfunktionswert, d.h. das für das Optimierungsziel angestrebte Skalar, minimal wird. Um die Funktionalität der lokalen verkehrsabhängigen Steuerung sicherzustellen, ist für $T_{iB}$ ein Intervall $\left[ T_{iB}^{min} ; T_{iB}^{max} \right]$ vorgegeben, innerhalb dessen Grenzen sich $T_{iB}$ befinden muss.

Bei einem Verfahren, das zum Vorfeld der Erfindung gehört, werden zwei Parameter der Lichtsignalsteuerung optimiert: die Versatzzeit und die Phasenfolge. Bei der Verwendung genetischer / evolutionärer Algorithmen in der Praxis werden Verletzungen der harten Randbedingungen häufig mit hohen Strafwerten (Penality) beaufschlagt, damit das Individuum vom genetischen Algorithmus als schlecht bewertet und mit großer Wahrscheinlichkeit nicht weitergeführt und ausselektiert wird, was allerdings nicht garantiert werden kann. Auch in dem bereits bekannten Verfahren der Online-Optimierung der Lichtsignalsteuerung in dem zwei Parameter optimiert werden, wurde für jede zu optimierende Versatzzeit eine Straffunktion eingeführt, um Verletzungen der Randbedingungen zu bestrafen.

Hinsichtlich der Kodierung der Steuerungsparameter wird noch auf die weiteren Ausführungen, die zum Verständnis der Erfindung erforderlich sind, hingewiesen.

Die bereits beschriebenen Steuerungsparameter Umlaufzeit, Versatzzeit, Phasenfolge und Phasendauern (bzw. Startzeitpunkte der Phasenübergänge) werden für genetische Algorithmen in ein Individuum beliebiger Länge kodiert:

$$\left\{\phi,(\sigma_1,\omega_1,\theta_{11},...,\theta_{1m_1}),(\sigma_2,\omega_2,\theta_{21},...,\theta_{2m_2}),...,(\sigma_n,\omega_n,\theta_{n1},...,\theta_{nm_n})\right\}$$

Das Individuum enthält ein Gen $\phi$ für die gemeinsame Umlaufzeit sowie n sogenannte Chromosomen für n Knotenpunkte des zu optimierenden Netzes. Jedes Chromosom besteht aus einem Gen $\sigma$ zur Festlegung der Phasenfolge, einem Gen $\omega$ für den globalen Versatz, sowie m Genen $\theta$ für die maximale Anzahl von möglichen Phasenübergängen. Jedes Gen nimmt einen reellen Wert zwischen 0,0 und 1,0 an.

Die Umlaufzeit $t_U$ wird üblicherweise und wie auch bekannt, errechnet zu

$$t_U = t_{U,\min} + \phi \cdot \left(t_{U,\max} - t_{U,\min}\right) \tag{1}$$

Kann die Umlaufzeit innerhalb des zu optimierenden Netzes frei gewählt werden, so kann $t_U$ direkt übernommen werden. Andernfalls wird das berechnete $t_U$ kaufmännisch auf die nächst mögliche Umlaufzeit gerundet.

Die Phasenfolge wird über eine Umrechnung des Gens in eine Kennziffer ausgewählt, die einer der möglichen Phasenfolgen zugeordnet ist.

$$i = \sigma \cdot s \tag{2}$$

mit s = Anzahl der verfügbaren Phasenfolgen

Die globale Versatzzeit wird generell wie folgt berechnet:

$$t_V = \omega \cdot t_U \tag{3}$$

Für die Kodierung der Phasendauern bzw. der Startzeitpunkte der Phasenübergänge, im Folgenden als T-Zeiten benannt, gibt es verschiedene Ansätze im Fachgebiet. Allen gemein ist jedoch die Nichteinhaltung der harten Randbedingungen hinsichtlich der lokalen verkehrsabhängigen Steuerung, wodurch die Lösung der technischen Aufgabe unter Einhaltung einer maximalen Rechenzeit nicht zufrieden stellend gelöst werden kann.

Beispiel einer solchen relativen Kodierung:

Die relative Kodierung lässt die Randbedingungen der lokalen verkehrsabhängigen Steuerung zunächst unberücksichtigt. Danach berechnen sich die Phasendauern zu

$$P_i = \frac{\theta_i}{\sum\limits_{l=1}^{k_\sigma} \theta_l} \cdot \left(t_U - \sum\limits_{l=1}^{k_\sigma} Z_{\sigma,l}\right)$$

$Z$ ist der minimale Abstand zwischen zwei benachbarten T-Zeiten, der sich aus der maßgebenden Summe von Zwischenzeit und Mindestfreigabezeit ergibt. Die Mindestphasendauern sind damit in dieser Formel bereits in $Z$ enthalten, d.h. $P_i$ ist nur der optimierbare Anteil der Phase.

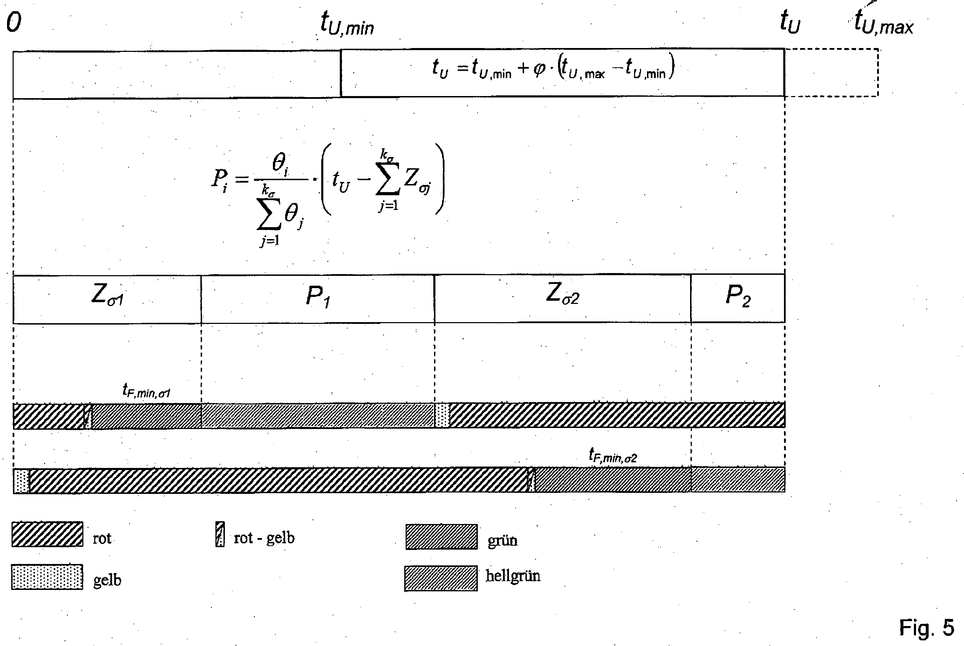

Eine diesbezügliche Darstellung ist in Figur 5 erfolgt, in der ein Phasendiagramm mit Darstellung der relativen Kodierung von Umlaufzeiten und Freigabezeiten aufgenommen ist.

Für die Position des Signalplans bezüglich der lokalen Zeitskala - auf die sich auch $T_{iB}^{\min}$ und $T_{iB}^{\max}$ beziehen (Randbedingungen aus der lokalen verkehrsabhängigen Steuerung) - ist ein zusätzliches Gen o für den lokalen Versatz erforderlich. Das Individuum wird daher um dieses Gen erweitert:

$$\left\{\phi,(\sigma_1,\omega_1,o_1,\theta_{11},...,\theta_{1m_1}),(\sigma_2,\omega_2,o_2,\theta_{21},...,\theta_{2m_2}),...,(\sigma_n,\omega_n,o_n,\theta_{n1},...,\theta_{nm_n})\right\}$$

Die T-Zeit-Grenzen errechnen sich dann zu:

$$T_{1B} = \left( T_{1B}^{\min} + o \cdot \left( T_{1B}^{\max} - T_{1B}^{\min} \right) \right)$$

Alle weiteren T-Zeiten $T_{iB}$ berechnen sich dann in Abhängigkeit von $T_{iB}$ und $Z$.

$$T_{iB} = \left( T_{1B} + \sum_{l=1}^{i-1} P_l + \sum_{l=1}^{i-1} Z_{\sigma,l} \right)$$

Durch die relative Kodierung sind die zwingenden Randbedingungen immer eingehalten. Allerdings ist damit noch nicht sichergestellt, dass auch die Randbedingungen der lokalen verkehrsabhängigen Steuerung eingehalten werden. Die übliche Vorgehensweise ist daher bei Nichteinhaltung die Nutzung der bereits genannten Straffunktion.

Eine praktische Lösung unter Einhaltung problemspezifischer Randbedingungen zur Kodierung der Steuerungsparameter zur Optimierung der Lichtsignalsteuerung stellt ein Reparaturmechanismus für die relative Kodierung dar.

Sämtliche T-Zeiten werden für jedes Chromosom hinsichtlich der Randbedingungen $[T_{iB}^{\min} ; T_{iB}^{\max}]$ überprüft. Für den Fall der Nichteinhaltung kommt ein neuer Reparaturmechanismus zum Einsatz, der das Chromosom so verändert, dass die Randbedingungen der lokalen verkehrsabhängigen Steuerung eingehalten werden. Sofern die Reparatur nicht funktioniert, wird das Chromosom zufällig neu erzeugt.

Der Reparaturmechanismus ist, wie die Erfinder herausgefunden haben, in seiner Ausführung ein neuer Ansatz und funktioniert wie folgt:

Für jede T-Zeit wird überprüft, ob sie sich innerhalb des Intervalls $[T_{iB}^{\min} ; T_{iB}^{\max}]$ befindet. Ist das nicht der Fall, wird der gesamte Signalplan mit Hilfe des lokalen Versatzes o so verschoben, dass die ungültige T-Zeit der nächsten Grenze des Intervalls $[T_{iB}^{\min} ; T_{iB}^{\max}]$ entspricht. Anschließend müssen alle T-Zeiten erneut überprüft werden.

Sobald der Signalplan einmal verschoben wurde, darf er nur noch in die gleiche Richtung weiter verschoben werden. Bei einem Widerspruch ist das Chromosom nicht zu reparieren und muss neu erzeugt werden. Der Signalplan darf immer nur komplett verschoben werden, da andernfalls nicht mehr sichergestellt wäre, dass die zwingenden Randbedingungen noch eingehalten sind.

Eine andere praktische Lösung unter Einhaltung problemspezifischer Randbedingungen zur Kodierung der Steuerungsparameter zur Optimierung der Lichtsignalsteuerung stellt eine sequentielle Kodierung dar.

Entwickelt wurde eine sequentielle Kodierung zur Umrechnung eines Individuums in einen Signalplan, der die Randbedingungen der lokalen verkehrabhängigen Steuerung direkt mit berücksichtigt, sodass weder Straffunktionen definiert werden müssen, noch eine so genannte Reparatur (a posteriori Verschieben der Signalpläne in gültige Bereiche) durchgeführt werden muss. Entscheidender Vorteil hierbei ist, dass die Rechenzeit für die Dekodierung des Individuums in Signalpläne auf ein Minimum reduziert wird, was für den Online-Betrieb von entscheidender Bedeutung ist.

Bei der sequentiellen Kodierung ist das Gen O, also der lokale Versatz nicht notwendig, da die Startzeitpunkte der Phasenübergänge (T-Zeiten) direkt kodiert werden. In den folgenden Formeln wird aus Gründen der Übersichtlichkeit auf den Index $B$ verzichtet (z.B. $T_i$ statt $T_{iB}$).

Die *erste* T-Zeit $T_i$, die dem lokalen Versatz entspricht, berechnet sich dabei direkt aus dem Gen $\theta_1$:

$$T_1 = \left( \tau_1^{\min} + \theta_1 \cdot \left( \tau_1^{\max} - \tau_1^{\min} \right) \right)$$

Sie liegt also zwingend im Intervall

$$T_1 \in [\tau_1^{\min}, \tau_1^{\max}]$$

wobei sich die Intervallgrenzen $\tau_1^{\min}$ und $\tau_1^{\max}$ aus den als bekannt vorausgesetzten Einschränkungen der T-Zeit-Grenzen ergeben.

Für die untere Intervallgrenze $\tau_1^{\min}$ gilt:

$$\tau_1^{\min} = \max\left(T_1^{\min}, T_{1|2}^{\min}, T_{1|3}^{\min}, \ldots, T_{1|n}^{\min}\right)$$

mit

$$T_{1|j}^{\min} = T_j^{\min} + \sum_{l=j}^{n} Z_l \quad \text{für alle } j = 2..n$$

wobei $T_{1|j}^{\min}$ die Bedingung für die untere Intervallgrenze $\tau_1^{\min}$ ist, die sich aus der minimalen T-Zeit-Grenzen Bedingung $T_j^{\min}$ ergibt.

$Z_l$ bezeichnet den minimalen Abstand zwischen zwei benachbarten T-Zeiten, also den Mindestabstand zwischen zwei Phasenübergängen und berechnet sich unter der Voraussetzung, dass bei der Planung der Lichtsignalanlage die Zwischenzeiten korrekt eingehalten wurden, zu:

$$Z_l = max(t_{gr,SG}^{min} + t_{on,SG} - t_{off,SG})$$

$t_{gr,SG}^{min}$ bezeichnet die Mindestgrünzeit einer Signalgruppe, $t_{on,SG}$ ist der Einschaltzeitpunkt der Signalgruppe innerhalb des Phasenübergangs zur aktuellen Phase, $t_{off,SG}$ der Ausschaltzeitpunkt der Signalgruppe innerhalb des nächsten Phasenübergangs.

Zu prüfen ist immer die Bedingung:

$$\tau_l^{min} = \begin{cases} \tau_l^{min} + t_u & wenn \ \tau_l^{min} < 0 \\ \tau_l^{min} & sonst \end{cases}$$

Für die obere Intervallgrenze $\tau_1^{max}$ gilt:

$$\tau_1^{max} = \min\left(T_1^{max}, T_{1|2}^{max}, T_{1|3}^{max}, \ldots, T_{1|n}^{max}\right)$$

mit

$$T_{1|j}^{max} = T_j^{max} - \sum_{l=1}^{n-1} Z_l \quad \text{für alle } j = 2..n$$

wobei $T_{1|j}^{max}$ die Bedingung für die obere Intervallgrenze ist, die sich aus der maximalen T-Zeit-Grenzen Bedingung $T_j^{max}$ ergibt.

Zusätzlich ist zu prüfen:

$$\tau_l^{max} = \begin{cases} \tau_l^{max} + t_u & wenn \ \tau_l^{max} < 0 \ oder \ \tau_l^{max} < \tau_l^{min} \\ \tau_l^{max} & sonst \end{cases}$$

Alle *weiteren* T-Zeiten $T_i$ werden sequentiell berechnet. Sie befinden sich jeweils im Intervall

$$T_i \in \left[ \max\left(T_i^{\min}, T_{i-1} + Z_{i-1}\right), \min\left(T_i^{\max}, T_{i|i+1}^{\max}, T_{i|i+2}^{\max}, \ldots, T_{i|n}^{\max}, T_1 + t_U - \sum_{l=i}^{n} Z_l \right)\right]$$

und werden dann analog wie $T_1$ über das zugehörige Gen $\theta_i$ berechnet.

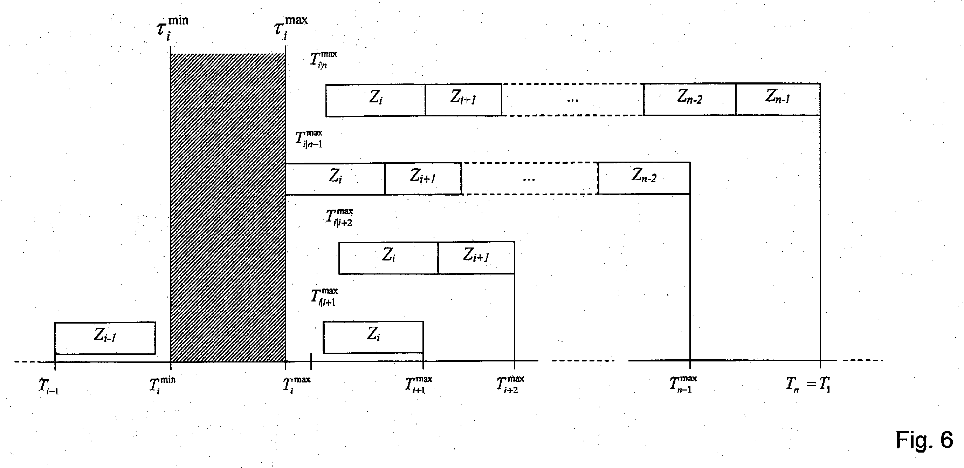

Fig. 6 verdeutlicht die Einschränkung der Intervallgrenzen für $T_i$. Für die untere Intervallgrenze $\tau_i^{\min}$ ist das Maximum aus $T_i^{\min}$ und der zuvor berechneten T-Zeit $T_{i-1}$ zuzüglich des Mindestabstands $Z_{i-1}$ zwischen $T_{i-1}$ und $T_i$ maßgebend. Für die obere Intervallgrenze $\tau_i^{\max}$ ist das Minimum aus $\tau_i^{\max}$, aller noch folgenden T-Zeit-Grenzen Bedingungen abzüglich der dazwischen liegenden Mindestabstände, und $T_1 + t_U$ abzüglich aller noch fehlenden Mindestabstände.

Sonderfall:

Bei Anlagen mit nur zwei Phasen und gleichen T-Zeit-Grenzen gilt für die untere Intervallgrenze $\tau_i^{min}$:

$$\tau_i^{min} = T_i^{min}$$

Für die obere Intervallgrenze $\tau_i^{max}$ gilt:

$$\tau_i^{max} = T_i^{max}.$$

Es ist wichtig zu beachten:

Bei allen Intervallen und "min/max Betrachtungen" ist zu berücksichtigen, dass es sich bei der Signalsteuerung um einen zyklischen Ablauf handelt, d.h. mit Ablauf der Umlaufzeit beginnt die Zeitskala üblicherweise wieder bei 0. Das Ergebnis des Ausdrucks $max(T_1;T_2)$ ist deshalb in obigen Formeln der zeitlich später liegende Zeitpunkt und nicht notwendigerweise der höhere skalare Wert. Daher ist zu berücksichtigen, dass vor den Berechnungen sämtliche Intervallgrenzen und T-Zeiten in die richtige (aufsteigende) Reihenfolge gebracht werden.

Die verwendete Kodierung eines Signalplans kann in verschiedenen modellbasierten Steuerungsverfahren, die evolutionäre / genetische Algorithmen zur Optimierung der Steuerungsparameter anwenden, verwendet werden.

Bezugsziffern:

1      Verkehrsrechner
1a     erfindungsgemäße Bereiche des Verkehrsrechners
2      Verkehrsfluss
3      Wirkungen
3a     Wirkungsgrößen
4      Verkehrsnetz
5      Zielfunktion
6      Fitness
7      neue Signalpläne, z.B. durch aktualisierte Parameter
7'     vorliegende Signalpläne, z.B. durch Projektierung
7a     erzeugte Signalpläne vor Verkehrsmodell 3
8      Optimierung
9      Anfangspopulation

10 Selektion
11 Rekombination
12 Individuum
13 Mutation
14 neue Population
15 Dekodierung
16 Beziehung wechselnde Nachfrage, Umwelteinflüsse, externe Einflüsse
17 frühester Start des Phasenüberganges
18 spätester Start des Phasenüberganges
19 Puffer für lokale Steuerung
20 Rahmensignalplan

Andere Bezugszeichen:

ev. Alg.     Evolutionärer Algorithmus
gen. Alg.    Genetischer Algorithmus
LSA          Lichtsignalanlage
DE           Detektor
DA           Verkehrsdaten, Detektormesswerte
PA           Parameter
$PA_n$       Parameter neu bzw. aktualisiert
$PA_v$       Parameter vorliegend (z. B. aus Anlagenprojektierung)
S            Steuerung der LSA (arbeitend z.B. mit neuem Signalplan 7 bzw. mit $PA_n$)
VE           Verkehrsgeschehen, reale Welt

**Patentansprüche**

1. Verkehrssteuerung zur Beeinflussung eines Verkehrsflusses (2) innerhalb eines beschränkten Straßen- bzw. Verkehrsnetzes (4) mit Kreuzungen, z. B. von einer Großstadt, mit einer der Kreuzungs- Anzahl N entsprechenden Anzahl von Lichtsignalanlagen (LSA) mit individuellen Steuerungen (S), deren den Steuerungsablauf aktuell bestimmende Signalpläne (7') an einen Verkehrsrechner (1) weiterleitbar sind,
wobei Detektoren (DE) im Zusammenhang mit den Lichtsignalanlagen (LSA) vorgesehen sind, durch die Verkehrsdaten (DA) erfassbar und an den Verkehrsrechner (1) weiterleitbar sind,
wobei auf dem Verkehrsrechner (1) evolutionäre Algorithmen (ev. Alg.) mit einem zugeordneten Abbruchkriterium (Abbruch) implementiert sind t,
**dadurch gekennzeichnet,**
**dass** der Verkehrsrechner (1) an alle N Lichtsignalanlagen (LSA) aufgrund des über die erfassten Verkehrsdaten (DA) ermittelten Verkehrsflusses (2) des Straßennetzes aktualisierte Signalpläne (7) innerhalb eines geeigneten Zeitrahmens an alle N Lichtsignalanlagen (LSA) zur Optimierung des Verkehrsflusses (2) zuführt, wobei ein Zeitintervall als einzuhaltende Randbedingung vorgegeben ist und ein Reparaturmechanismus bei relativer Kodierung oder eine sequentielle Kodierung bereitgestellt wird, um das Zeitintervall, innerhalb dessen die Phasenübergänge ($T_{iB}$), die Bestandteil eines Signalplanes sind, sich befinden müssen, einzuhalten.

2. Verkehrssteuerung nach Anspruch 1, **dadurch gekennzeichnet, dass** der Verkehrsrechner (1) einen Bereich (1a) mit Unterbereichen aufweist, der die Evolutionären Algorithmen (ev. Alg.) bzw. genetischer Algorithmus (gen. Alg.), ein Abbruchkriterium (Abbruch) und bei relativer Kodierung den Reparaturmechanismus oder die sequentielle Kodierung verkörpert.

3. Verkehrssteuerung nach Anspruch 2, **dadurch gekennzeichnet, dass** der Bereich (1a) durch einen separaten Rechner gebildet wird, der in Datenaustausch mit dem Rechner (1) steht.

4. Verkehrssteuerung nach einem der vorhergehenden Ansprüche, **dadurch gekennzeichnet, dass** die Optimierung des Verkehrsflusses (2) in einem Optimierungszeitintervall von fünf bis zehn Minuten erfolgt.

5. Verfahren zum Betrieb einer Verkehrssteuerung, insbesondere nach einem der vorhergehenden Ansprüche, mit den Schritten zur Optimierung:

- Bewerten des Verkehrsflusses (2) mit einem Verkehrsmodell (3) innerhalb des Rechners (1),
- Eingeben der Daten (DA) von Detektoren (DE) von Kreuzungen des Verkehrsnetzes (4),
- Eingeben von Signalpläne (7') der Lichtsignalanlagen (LSA),
- Anwendung evolutionärer Algorithmen mit einem zugeordneten Abbruchkriterium (Abbruch) zur Optimierung von Signalplänen,
- Bilden einer Wirkungsgröße (3a) mittels des Verkehrsmodells (3),
- vor der Optimierung Bewerten der Wirkungsgröße (3a) mit einer Zielfunktion (5) zur Gewinnung einer Fitness (6),
- Ausgeben neuer Signalpläne (7) bei Vorliegen eines geeigneten Fitnesswerts an die Lichtsignalanlagen (LSA) des Verkehrsnetzes (4),
- bei Nichtvorliegen eines geeigneten Fitnesswertes Durchlauf zur Optimierung (8) von einer Verarbeitungsschleife mit Selektion (10), Rekombination (11), Mutation (13), Neuer Population (14) und Dekodierung (15),
- zu Beginn der Optimierung Erzeugen einer Anfangspopulation (9),
- Bildung eines Individuums (12) mit Genen als Steuerungsparameter im Bereich (9, 10, 11, 13 - 15) entsprechend evolutionärer Algorithmen,
- Rückübersetzung mit der Dekodierung (15) in einen Signalplan (7a),
- Durchlaufen der Schleife Optimierung (8) solange, bis ein Abbruchkriteriums (Abbruchs) erfüllt ist und nach Erfüllung des Abbruchkriteriums ein neuer Signalplan (7) an die Lichtsignalanlagen (LSA) ausgegeben werden kann,

**dadurch gekennzeichnet,**

**dass** das Verfahren ferner die Schritte umfasst

- Vorsehen einer eingrenzbaren Anzahl von Schleifendurchläufen zur Einhaltung eines geeigneten Zeitrahmens, innerhalb dessen Phasenübergänge ($T_{iB}$) sich befinden müssen, zur Ausgabe aller Signalpläne (7) an alle Lichtsignalanlagen (LSA), und
- Bereitstellen eines Reparaturmechanismus bei relativer Kodierung oder Bereitstellen einer sequentiellen Kodierung.

6. Verfahren zum Betrieb einer Verkehrssteuerung nach Anspruch 5, **dadurch gekennzeichnet, dass** Individuen, aus der neuen Population (14) in Signalpläne (7a) dekodiert werden, die dem weiteren Schleifendurchlauf unterliegen.

7. Verfahren zum Betrieb einer Verkehrssteuerung nach Anspruch 6, **dadurch gekennzeichnet, dass** in Abhängigkeit von der Rechenleistung des Rechners eine erhebliche Anzahl von Individuen, die Signalpläne (7a) repräsentieren, erzeugt werden.

8. Verfahren zum Betrieb einer Verkehrssteuerung nach Anspruch 5 bis 7, **dadurch gekennzeichnet, dass** zur Einhaltung der Randbedingungen aus einer lokalen verkehrsabhängige Steuerung bei dem Reparaturmechanismus bei relativer Kodierung T-Zeiten für jedes Chromosom definiert sind, dass jede T-Zeit überprüft wird, ob sie sich innerhalb des Intervalls $[T_{iB}^{\min} ; T_{iB}^{\max}]$ befindet und falls dies nicht der Fall ist, der gesamte Signalplan mit Hilfe des lokalen Versatzes $O$ so verschoben wird, so dass die ungültige T-Zeit der nächsten Grenze des Intervalls $[T_{iB}^{\min} ; T_{iB}^{\max}]$ entspricht, wobei anschließend alle T-Zeiten erneut überprüft werden müssen.

9. Verfahren zum Betrieb einer Verkehrssteuerung nach Anspruch 5 bis 7 **dadurch gekennzeichnet, dass** zur Einhaltung der Randbedingungen aus einer lokalen verkehrsabhängigen Steuerung bei der sequentiellen Kodierung T-Zeiten $T_i$ sequentiell berechnet werden, wobei die *erste* T-Zeit $T_1$, die dem lokalen Versatz $O$ entspricht, sich dabei direkt aus dem Gen $\theta_1$ berechnet:

$$T_1 = \left( \tau_1^{\min} + \theta_1 \cdot \left( \tau_1^{\max} - \tau_1^{\min} \right) \right)$$

und ferner für alle Zeiten $T_i$ vorgesehen ist, dass sie sich jeweils im Intervall

$$T_i \in \left[ \max\!\left(T_i^{\min}, T_{i-1} + Z_{i-1}\right), \min\!\left(T_i^{\max}, T_{i|i+1}^{\max}, T_{i|i+2}^{\max}, \ldots, T_{i|n}^{\max}, T_1 + t_U - \sum_{l=i}^{n} Z_l\right) \right]$$

befinden und analog wie $T_1$ über das zugehörige Gen $\theta_i$ berechnet werden.

10. Computerprogrammprodukt, das direkt in einen Speicherbereich (1a), mindestens Unterbereich von (1a) des Verkehrsrechners (1) oder eines separaten Rechners, wie insbesondere in Anspruch 3 angegeben, ladbar ist, mit Programmcode- Mitteln, die dazu bestimmt sind, einzelne oder alle Schritte des vorstehend beschriebenen Verfahrens gemäß den Ansprüchen 5 bis 9 auszuführen, wenn das Computerprogrammprodukt auf dem entsprechenden Rechner der Verkehrssteuerung ausgeführt wird.

**Claims**

1. A traffic control system for influencing a traffic flow (2) within a limited road or traffic network (4) with road junctions, e.g. in a large town, with a number, corresponding to the number N of the road junctions, of light signal installations (LSA) with individual controllers (S), whose signal programs (7') currently determining the control sequence may be transmitted to a traffic computer (1), wherein detectors (DE) are provided in conjunction with the light signal installations (LSA), by means of which the traffic data (DA) may be determined and may be transmitted to the traffic computer (1), wherein implemented on the traffic computer (1) there are evolutionary algorithms (ev. Alg.) with an associated interruption criterion (interruption), **characterised in that** the traffic computer (1) supplies signal programs (7) updated on all N light signal installations (LSA) as a result of the traffic flow (2) in the road network determined by way of the detected traffic data (DA) within a suitable timeframe to all N light signal installations (LSA) to optimise the traffic flow (2), wherein a time interval is predetermined as a boundary condition to be met and a repair mechanism with relative coding or a sequential coding is provided in order to maintain the time interval within which the phase transitions ($T_{IB}$), which are a component of a signal program, must be located.

2. A traffic control system as claimed in Claim 1, **characterised in that** the traffic computer (1) includes a region (1a) with sub-regions, which embodies the evolutionary algorithms (ev. Alg.) or genetic algorithm (gen. Alg.), an interruption criterion (interruption) and, with relative coding, the repair mechanism or the sequential coding.

3. A traffic control system as claimed in Claim 2, **characterised in that** the region (1a) is constituted by a separate computer, which is in a data exchange relationship with the computer (1).

4. A traffic control system as claimed in one of the preceding claims, **characterised in that** the optimisation of the traffic flow (2) occurs in an optimisation time interval of five to ten minutes.

5. A method of operating a traffic control system, particularly as claimed in one of the preceding claims, with the steps for optimisation:

   - assessing the traffic flow (2) with a traffic model (3) within the computer (1),
   - inputting the data (DA) from detectors (DE) of road junctions of the traffic network (4),
   - inputting signal programs (7') into the light signal installations (LSA),
   - using evolutionary algorithms with an associated interruption criterion (interruption) to optimise signal programs,
   - generating an effect parameter (3a) by means of the traffic model (3),
   - before the optimisation, assessing the effect parameter (3a) with a target function (5) to produce a fitness (6),
   - outputting new signal programs (7) when a suitable fitness value is present at the light signal installations (LSA) of the traffic network (4),
   - when a suitable fitness value is not present, running through a processing loop with selection (10), recombination (11), mutation (13), new population (14) and decoding (15) for the purpose of optimisation (8),
   - producing a starting population (9) at the beginning of the optimisation,
   - generating an individual (12) with genes as a control parameter in the region (9, 10, 11, 13 - 15) corresponding to evolutionary algorithms,
   - retranslation with the decoding (15) into a signal program (7a),
   - running through the optimisation (8) loop until an interruption criterion (interruption) is satisfied and, after satisfaction of the interruption criterion, a new signal program (7) can be output to the light signal installations (LSA),

**characterised in that**

the method further includes the steps

- providing a definable number of passages through the loop to maintain a suitable timeframe, within which phase transitions ($T_{IB}$) must be located in order to output all the signal programs (7) to all the light signal installations (LSA), and

- providing a repair mechanism with relative coding or providing a sequential coding.

6. A method of operating a traffic control system as claimed in Claim 5, **characterised in that** individuals from the new population (14) are decoded into signal programs (7a), which form the basis of the further passage through the loop.

7. A method of operating a traffic control system as claimed in Claim 6, **characterised in that**, depending on the computing power of the computer, a considerable number of individuals, which represent signal programs (7a), are produced.

8. A method of operating a traffic control system as claimed in Claims 5 to 7, **characterised in that** in order to maintain the boundary conditions from a local traffic-dependent controller with the repair mechanism with relative coding, T times are defined for each chromosome, that each T time is checked as to whether it is situated within the interval

$$\left[ T_{IB}^{min} ; T_{IB}^{max} \right]$$

and if this is not the case the entire signal program is shifted with the aid of the local offset o so that the invalid T time corresponds to the next boundary of the interval $\left[ T_{IB}^{min} ; T_{IB}^{max} \right]$, whereby all the T times must then again be checked.

9. A method of operating a traffic control system as claimed in Claims 5 to 7, **characterised in that** in order to maintain the boundary conditions from a local traffic-dependent controller with the sequential coding T times $T_l$ are sequentially calculated, wherein the first T time $T_1$, which corresponds to the local offset $O$ is calculated directly from the gene $\theta_1$:

$$T_1 = \left( \tau_1^{min} + \theta_1 \cdot \left( \tau_1^{max} - \tau_1^{min} \right) \right)$$

and it is further provided for all times $T_i$ that they are situated in each case in the interval

$$T_i \in \left[ \max\left( T_i^{min}, T_{i-1} + Z_{i-1} \right), \min\left( T_i^{max}, T_{i|i+1}^{max}, T_{i|i+2}^{max}, \ldots, T_{i|n}^{max}, T_1 + t_U - \sum_{i=1}^{n} Z_i \right) \right]$$

and, analogously to $T_1$ are calculated by means of the associated gene $\theta_i$.

10. A computer program product which may be loaded directly into a storage region (1a), at least one sub-region of (1a) of the traffic computer (1) or of a separate computer, as stated, in particular in Claim 3, with program code means, which are provided to perform individual or all steps of the method described above as claimed in Claims 5 to 9 when the computer program product is executed on the corresponding computer of the traffic control system.

**Revendications**

1. Système de commande de circulation permettant d'influencer un flux de circulation (2) à l'intérieur d'un réseau routier ou de voies de communication (4) limité avec des carrefours, d'une grande ville, par exemple, présentant un nombre N d'installations de signalisation lumineuse (LSA) correspondant au nombre de carrefours avec des systèmes de commande individuels (S), dont les plans de signaux (7') déterminant en temps réel le processus de commande sont transmissibles à un ordinateur de trafic (1),

où des détecteurs (DE) sont prévus en relation avec les installations de signalisation lumineuse (LSA), au moyens desquels les données de trafic (DA) peuvent être saisies et transmises à l'ordinateur de trafic (1),

où des algorithmes évolutionnaires (ev. Alg.) sont implémentés sur l'ordinateur de trafic (1) avec un critère d'interruption (Abbruch) associé,

**caractérisé en ce que**

l'ordinateur de trafic (1) transmet à l'intérieur d'un cadre temporel adéquat des plans de signaux (7) actualisés à toutes les N installations de signalisation lumineuse (LSA) sur la base du flux de circulation (2) du réseau routier déterminé au moyen des données de trafic (DA) saisies pour l'optimisation du flux de circulation (2), un intervalle temporel étant prescrit en tant que condition marginale à respecter et un mécanisme de réparation en cas de codage relatif ou un codage séquentiel étant rendu disponible pour respecter l'intervalle temporel à l'intérieur duquel doivent se trouver les transitions de phase ($T_{IB}$) faisant partie d'un plan de signaux.

2.  Système de commande de circulation selon la revendication 1, **caractérisé en ce que** l'ordinateur de trafic (1) comprend une plage (1a) avec des sous-plages, laquelle intègre les algorithmes évolutionnaires (ev. Alg.) ou un algorithme génétique (gen. Alg.), un critère d'interruption (Abbruch) et le mécanisme de réparation en cas de codage relatif ou le codage séquentiel.

3.  Système de commande de circulation selon la revendication 2, **caractérisé en ce que** la plage (1a) est formée par un ordinateur séparé qui se trouve en liaison de communication de données avec l'ordinateur (1).

4.  Système de commande de circulation selon l'une des revendications précédentes, **caractérisé en ce que** l'optimisation des flux de circulation (2) est effectuée pendant un intervalle temporel d'optimisation compris entre cinq et dix minutes.

5.  Procédé de mise en oeuvre d'un système de commande de circulation, en particulier selon l'une des revendications précédentes, comprenant les étapes d'optimisation suivantes :

    - évaluation du flux de circulation (2) avec un modèle de trafic (3) à l'intérieur de l'ordinateur (1).
    - entrée de données (DA) des détecteurs (DE) des carrefours du réseau de voies de communication (4),
    - entrée de plans de signaux (7') des installations de signalisation lumineuse (LSA),
    - application d'algorithmes évolutionnaires avec un critère d'interruption (Abbruch) associé pour l'optimisation de plans de signaux,
    - formation d'une grandeur d'action (3a) au moyen du modèle de trafic (3),
    - avant l'optimisation, évaluation de la grandeur d'action (3a) avec une fonction de performance (5) pour l'obtention d'une aptitude (6),
    - si une valeur d'aptitude appropriée est présentée, transmission de nouveaux plans de signaux (7) aux installations de signalisation lumineuse (LSA) du réseau de voies de communication (4).
    - si une valeur d'aptitude appropriée n'est pas présentée, itération pour optimisation (8) d'une boucle de traitement avec sélection (10), recombinaison (11), mutation (13), nouvelle population (14) et décodage (15),
    - génération d'une population initiale (9) au début de l'optimisation,
    - formation d'un individu (12) ayant des gènes en tant que paramètre de commande dans la plage (9, 10, 11, 13 -15) correspondant à des algorithmes évolutionnaires,
    - retraduction avec le décodage (15) dans un plan de signaux (7a),
    - itération de la boucle optimisation (8) jusqu'à ce qu'un critère d'interruption (Abbruch) soit satisfait, et qu'après satisfaction du critère d'interruption, un nouveau plan de signaux (7) puisse être transmis aux installations de signalisation lumineuse (LSA),
    **caractérisé en ce que**
    ledit procédé comprend en outre les étapes de
    - prévision d'un nombre délimitable d'itérations de boucle pour le respect d'un cadre temporel adéquat à l'intérieur duquel doivent se trouver des transitions de phase ($T_{IB}$), pour la transmission de tous les plans de signaux (7) à toutes les installations de signalisation lumineuse (LSA), et de
    - mise à disposition d'un mécanisme de réparation en cas de codage relatif ou mise à disposition d'un codage séquentiel.

6.  Procédé de mise en oeuvre d'un système de commande de circulation selon la revendication 5, **caractérisé en ce que** des individus sont décodés de la nouvelle population (14) dans des plans de signaux (7a), lesquels sont soumis à la nouvelle itération de boucle.

**7.** Procédé de mise en oeuvre d'un système de commande de circulation selon la revendication 6, **caractérisé en ce qu'**un nombre important d'individus représentant des plans de signaux (7a) est généré en fonction de la puissance de calcul de l'ordinateur.

**8.** Procédé de mise en oeuvre d'un système de commande de circulation selon les revendications 5 à 7, **caractérisé en ce que** des temps T sont définis pour chaque chromosome pour le respect des conditions marginales à partir d'une commande locale dépendant du trafic pour le mécanisme de réparation en cas de codage relatif, **en ce que** chaque temps T fait l'objet d'un contrôle s'il se trouve compris dans l'intervalle $\left[T_{iB}^{\min} ; T_{iB}^{\max}\right]$, et si cela n'est pas le cas, l'ensemble du plan de signaux est déplacé au moyen du décalage local $O$ de telle manière que le temps T invalide corresponde à la prochaine limite de l'intervalle $\left[T_{iB}^{\min} ; T_{iB}^{\max}\right]$, tous les temps T devant ensuite faire l'objet d'un nouveau contrôle

**9.** Procédé de mise en oeuvre d'un système de commande de circulation selon les revendications 5 à 7, **caractérisé en ce que** des temps T $T_i$ sont séquentiellement calculés pour le respect des conditions marginales à partir d'une commande locale dépendant du trafic en cas de codage séquentiel, le premier temps T $T_1$ correspondant au décalage local $O$ étant en l'occurrence directement calculé à partir du gène $\theta_1$ :

$$T_1 = \left(\tau_1^{\min} + \theta_1 \cdot \left(\tau_1^{\max} - \tau_1^{\min}\right)\right)$$

et **en ce qu'**il est en outre prévu pour tous les temps $T_i$ que ceux-ci se trouvent chacun dans l'intervalle

$$T_i \in \left[\max\left(T_i^{\min}, T_{i-1} + Z_{i-1}\right), \min\left(T_i^{\max}, T_{fi+1}^{\max}, T_{fi+2}^{\max}, \ldots, T_{fin}^{\max}, T_1 + t_U - \sum_{l=i}^{n} Z_l\right)\right]$$

et soient calculés de manière analogue à $T_1$ au moyen du gène $\theta_i$ correspondant.

**10.** Produit de programme informatique, lequel peut être directement chargé dans une plage de mémoire (1a), au moins une sous-plage (1a) de l'ordinateur de trafic (1) ou d'un ordinateur séparé, comme indiqué en particulier en revendication 3, avec des moyens de code programme destinés à exécuter différentes étapes, ou toutes les étapes du procédé susmentionné selon les revendications 5 à 9, quand le produit de programme informatique est exécuté sur l'ordinateur du système de commande de circulation correspondant.

Fig. 1

Fig. 2

**Fig. 3**

$T_{2B}^{min}$ $T_{2B}^{max}$

| 20 | $T_{1A}$ | $T_{1B}$ | $T_{2A}$ | $T_{2B}$ | $T_{4A}$ | $T_{4B}$ |

17 18

19

Phasenübergang    Phasenübergang         Phasenübergang

Phase 1           Phase 2           Phase 4

4 - 1        1 - 2        2 - 4

K1

K2

K3

K4

**Fig. 4**

EP 2 345 020 B1

$$0 \qquad\qquad\qquad t_{U,min} \qquad\qquad\qquad\qquad\qquad\qquad\qquad\qquad t_U \quad t_{U,max}$$

$$t_U = t_{U,min} + \varphi \cdot \left( t_{U,max} - t_{U,min} \right)$$

$$P_i = \frac{\theta_i}{\displaystyle\sum_{j=1}^{k_\sigma} \theta_j} \cdot \left( t_U - \sum_{j=1}^{k_\sigma} Z_{\sigma j} \right)$$

| $Z_{\sigma 1}$ | $P_1$ | $Z_{\sigma 2}$ | $P_2$ |
|:---:|:---:|:---:|:---:|

$t_{F,min,\sigma 1}$

$t_{F,min,\sigma 2}$

| | rot | | rot - gelb | | grün |
|---|---|---|---|---|---|
| | gelb | | | | hellgrün |

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005041067 A1
- DE 102005035213 A1
- DE 102005044888 B4
- DE 19841457 A1